# EUROPEAN PATENT SPECIFICATION

(11) **EP 1 329 125 B1**
(45) Date of publication and mention of the grant of the patent: **03.01.2007**
(21) Application number: 01978412.3
(22) Date of filing: 15.10.2001
(51) Int. Cl.: H04Q 7/38

(54) **MOBILE STATION AND METHOD OF LOCATING THE MOBILE STATION**
MOBILES ENDGERÄT UND VERFAHREN ZU DESSEN ORTUNG
STATION MOBILE ET PROCEDE DE LOCALISATION DE STATION MOBILE

(30) Priority: 20.10.2000 GB 0025762
(43) Date of publication of application: 23.07.2003
(73) Proprietor: MOTOROLA, INC., Schaumburg, IL 60196 (US); Motorola Limited, Basingstoke, Hampshire RG22 4PD (GB)
(72) Inventor: SHAHAF, Mark, Tel-Aviv, 67899 (IL); SERFATY, Salomon, Tel-Aviv, 67899 (IL); CARMON, Rafael, Tel-Aviv, 7899 (IL)
(74) Representative: McCormack, Derek James
(86) International application number: PCT/EP2001/011880
(87) International publication number: WO 2002/035875

(56) References cited:
- EP-A- 0 767 594
- EP-A- 0 856 746
- WO-A-99/56493
- WO-A-99/57932
- DE-A- 19 852 860

## Description

### Field Of The Invention

This invention relates to a radio communication device and method. The device and method are useful in mobile communication systems. These may be cellular radio communications systems, such as systems using protocols based on the TETRA standards. More particularly, the invention relates to a mobile station and method operable to measure the location of the mobile station within such a communication system.

### Background Of The Invention

TErrestrial Trunked Radio (TETRA) is a new set of standards defined by the European Telecommunications Standards Institute (ETSI) for multipurpose radio communication systems, which has been adopted in Europe and is being adopted by a growing number of system operators throughout the world. Such operators mainly include public safety organisations, such as the police, military organisations and commercial enterprises that lease communication services on cellular systems to private businesses.

Like other cellular systems, a TETRA based system typically has a grid of base transceiver stations deployed over the coverage area and a plurality of subscriber mobile stations. The subscriber mobile stations are also referred to as mobile radio stations or subscriber stations or radios. In this specification the expression 'mobile station' embraces mobile and portable radio communication units, radiotelephones and the like. A mobile station, when on, has at any time a two-way communication link with one base station. This base station is termed the serving station. It is the station through which communications to other units, including other mobile stations operating within the system, pass. At the same time, the mobile station also monitors several neighbouring base stations for signal strength. The MS may do this to maintain an ordered list of preferred candidate base stations to become the serving station when conditions change, e.g. due to relocation of the mobile station. This change is known in the art as handoff (or handover).

There is a need, within cellular communication systems in general, and TETRA-based systems in particular, occasionally to be able to locate (that is - to determine the current location of) any particular active mobile station within the area of deployment of the system. Such a need may arise, for example, in the event of an emergency. In many countries there will be government requirements to provide caller location upon each call made to emergency services. As another example, there may be a need for location data for the purpose of providing location-related information, such as supplied over the Internet.

One obvious method of providing a mobile station with locating capability is to integrate into it a receiver of a Global Positioning System (GPS) satellite-based system. The cost of such a receiver is, however, relatively high. It also has the significant disadvantage of not operating indoors, or when otherwise obscured from the satellites, as is a common situation within cities.

Several basic radio techniques are generally known for performing the task of location of a mobile station. These include the so-called Time of Arrival (TOA), Time Difference of Arrival (TDOA), Direction of Arrival (DOA) and Angle of Arrival (AOA) types of techniques.

With TOA, the time of arrival of a particular received signal is compared with that of a standard time base, the difference indicating the distance between the transmitter and the receiver. By thus determining the distances between the mobile station and neighbouring base stations, the mobile station's position may be found by simple triangulation.

In the prior art, the general system approach which has been taken for measuring location of a mobile station has been an infrastructure based approach, whereby signals transmitted between base stations and a mobile station are employed to carry out the relevant measurements and computation of location based on the measurement results is carried out using system fixed hardware, e.g. one or more of the system base transceivers.

Sending special signals from the mobile station, as is required by an infrastructure based approach, can be complicated to implement within any given transmission standards. This is especially true if such signals are to be of any substantial duration, which would be needed for higher accuracy of location measurement. Moreover, the system equipment changes which are necessary to implement such a system are relatively extensive and therefore relatively costly, because of the required inter-station co-operation required.

EP-A-767,594 describes a position determination method in which observed time difference values of receipt of training signals from different base stations are calculated in a mobile station. However, the mobile station transfers the calculated difference values to a mobile communication system infrastructure for further processing to compute position of the mobile station. The method is aimed particularly at positioning in a GSM communication system.

### Summary Of The Invention

According to the present invention in a first aspect there is provided a method of operation in a cellular radio communication system operating according to a TDMA (time division multiple access) protocol to provide communication of traffic and control data, including the following steps:
a) identifying in a mobile station operating in the system at least one type of signal which can be measured that - is sent by a plurality of selected base transmitters including a serving base transmitter and at least two other neighbouring base transmitters,
b) obtaining and storing in the mobile station a sample of the identified signals from the selected base transmitters;
c) detecting by the mobile station an occurrence of the identified signal in a signal received from the serving base transmitter, then correlating the signal with the corresponding sample stored in step (b) and noting the relative time of peak correlation as a respective time of arrival;
d) detecting by the mobile station an occurrence of the identified signal in each of the signals received from said other selected neighbouring base transmitters, then correlating the signal in each case with the corresponding sample stored in step (b) and noting the relative time of peak correlation as a respective time of arrival; and
e) from the time of arrival values computing the location of the mobile station relative to the selected base transmitters;
characterised in that the identified signal received from each of the base transmitters and used in noting the time of arrival values is a BNCH (Broadcast Network Control Channel) burst carrying control data in a block of a given time slot of the TETRA TDMA protocol and that the computation of the location is carried out by the mobile station using the time of arrival values of the selected BNCH bursts.

According to the present invention in a second aspect there is provided a mobile station which is operable to determine its own location by the method according to the first aspect and which comprises:
a detector for detecting the reception of a signal sent by each of at least three base transmitters including a serving base transmitter and at least two other base transmitters ;
a memory for storing a sample of a signal sent by each of said at least three neighbouring base transmitters;
a correlator coupled to the memory and to the detector for correlating each detected signal detected by the detector with a respective one of corresponding stored samples stored by the memory and for noting a relative time of peak correlation for each signal as a respective time of arrival; and
a processor coupled to the correlator for calculating timing and/or TDOA values from pairs of results of said time correlation and for calculating the location of the mobile station from at least two pairs of said TDOA values,
   characterised in that the signal received in operation from each of the base transmitters and used in noting the time of arrival values is a BNCH burst carrying control data in a block of a given time slot of the TETRA TDMA protocol and that the computation of the location is carried out by the mobile station using the time of arrival values of the selected BNCH bursts.

A known and repeatable signal which could serve for a TDOA correlation measurement is for example the synchronisation sequence ("Sync") that is periodically transmitted by all base transceiver stations. This has, however, a significant disadvantage: The Sync signals sent by all stations are identical. Groups of them, topographically interleaved, are sent on identical carrier-frequency channels and, moreover, are not differentiated by scrambling codes. A mobile station may therefore receive, in addition to the Sync signal that it receives from each of the adjacent stations with which it communicates for the purpose, several such remotely transmitted signals, each with different delay - adding up to a composite signal whose timing is a weighted average. Although normally such multiple-signal reception does not interfere with the decoding of message signals, it is likely to detract seriously from the timing accuracy of the correlation operation, required for localisation. Thus, preferably, a different, less common, signal should serve for the required correlation operations.

A method and a mobile station according to the invention are such that for signals from each of two or more pairs of the base transmitters the mobile station is operable to compute the difference between the two respective times of arrival and to subtract therefrom the difference between the corresponding nominal times of occurrence of the respective measurable signals, each pair yielding a corresponding Time Difference of Arrival (TDOA) value; and computing the location from the TDOA values.

The present invention provides a mobile station and a method, for use within a cellular communication system, for locating the mobile station relative to neighbouring base stations, e.g. base transmitters or transceivers, using mobile-station-based approach and time of arrival or time-difference-of arrival (TDOA) techniques, which does not require the sending of special signals for the purpose nor any inter-base station communication, but relies entirely on signals normally transmitted by the base stations. Advantageously, the mobile station and method may be implemented without any necessary modification to fixed infrastructure hardware, or to system signalling protocols already in use, thereby avoiding the considerable cost and effort involved in such modification.

Thus, the present invention is suitable to provide measurement of location of a mobile station within a digital radio communication system compatible with the TETRA standard procedures.

Further benefits of the present invention are that the location results can be highly accurate and may be obtained without being affected by signals from other base stations (not providing signals for the measurements). The duration of the location process may be carried out rapidly, for example in a time which does not exceed four seconds.

Measurement of TDOA from two base stations as in the preferred form of the invention generally requires the presence of known data segments in the signals of both base stations and involves correlating the signal received from each of the two base stations with a stored version thereof and measuring the relative time relationship between the two correlation maxima. The essence of the invention is identifying, as suitable objects of TDOA measurement, certain detectable signal segments, normally transmitted by the base stations, that are either fully known, or likely to be repeated, but still differ among all base stations so as not to interfere with each other. In the context of TETRA, such signal segments include primarily bursts that carry control data of the Broadcast Network type of Control channel, to be referred to as BNCH signals. These signals are typically scrambled, according to a scheme unique to each base station.

A procedure for use in a mobile station for making a TDOA measurement, according to an embodiment of the present invention, comprises -
(1) detecting one of specified bursts in the signal received from each of the three stmngest-received base stations and, for each such burst, constructing a corresponding digital matched filter;
(2) gating in the next occurrence of the respective burst in the signal received from the servicing base station, passing it through the corresponding matched filter and noting the time of maximum correlation;
(3) switching reception to the second base station and performing on the respective burst a process similar to that of step (2);
(4) repeating step (3) for the third base station;
(5) determining the timing differences between the signal received from the servicing station and those from the other two stations, whereby their inherent nominal delays are taken in account, and calculating therefrom the distances of the mobile station from them.

The cellular communication system in which the mobile station according to the first aspect of the invention is applied may be a mobile or portable radio (PMR), for use a TETRA system.

The location results obtained by the mobile station according to the second aspect of the invention may be stored in a memory within the station until updated. The results (which may be periodically updated) may be transmitted by radio communication to an associated system unit, e.g. a serving base transceiver or a system database, for recordal. Alternatively, or in addition the results (which may be periodically updated) may be transmitted by radio or other communication link to a destination outside the system, e.g. a police control unit where the location information is of interest to and required by the police. Alternatively, or in addition, the results (which may be periodically updated) may be displayed on a display device associated with the mobile station, e.g. part of the mobile station. The results may be displayed constantly, from time to time or upon request of a user, e.g. by selection of an appropriate button or bard or soft key provided for this purpose. The results may be given in any suitable format, e.g. as numbers which represent location co-ordinates, e.g. cartesian co-ordinates or polar co-ordinates and/or as a graphical map image with the detected location shown on the map.

Embodiments of the present invention will now be described by way of example with reference to the accompanying drawings in which:

### Brief description of the accompanying drawings

**Figure 1** is a schematic illustration of the TDOA location method, used in an embodiment of the present invention;
**Figure 2** is a schematic diagram of temporal signal structure according to the TETRA standards;
**Figure 3** is a schematic diagram of the detailed structure of certain burst signals within one slot of the structure of Figure 2;
**Figure 4** is a schematic diagram of the scheme of allocating broadcast control signals within the eighteenth frame of the multi-frame of Figure 2;
**Figure 5** is a schematic diagram of the time periods within any TETRA frame over which measurable signals occur, according to the present invention; and
**Figure 6** is a schematic diagram of the time periods within an eighteenth frame in the TETRA protocol over which measurable signals occur, according to the present invention.

### Detailed description of embodiments of the invention

An embodiment of the invention is now described with regard to a particular cellular communication system using the TETRA standards. The TETRA standards are published by European Telecommunications Standards Institute and will be familiar to those skilled in the relevant art, although those aspects thereof which are useful to an understanding of the invention are explained below.

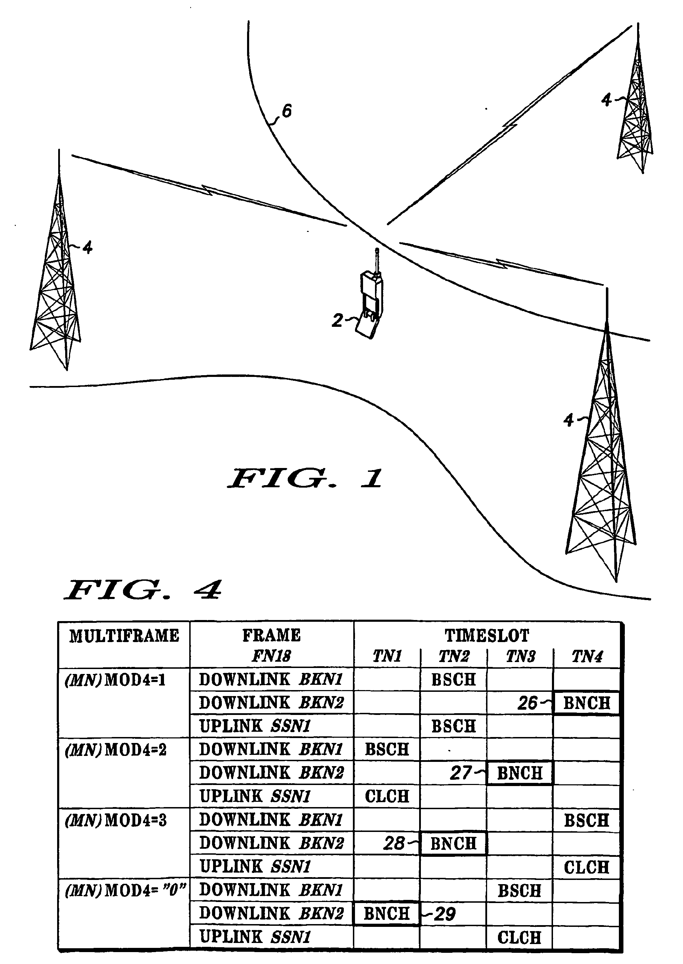

Figure 1 illustrates a mobile station being in radio contact with three adjacent base transceiver stations. It is reasonable to assume that the position of the mobile station is within a triangle formed by these three stations as corners, although there is also a probability of it being located some distance outside this triangle. The task that the present invention helps perform is to locate the mobile station (also referred to below as the "subscriber") more specifically within the triangle. In most practical cases this means locating the station to within about 100 metres of its true position, although the invention also enables higher accuracy to be achieved.

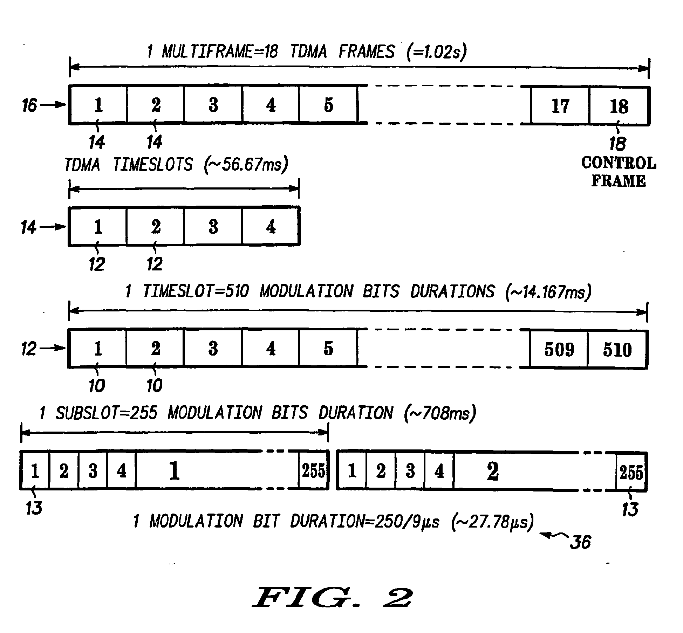

Figure 2 shows schematically, at various timescales, the framework structure of a signal transmitted by a base station according to the TETRA standard. Basically this standard stipulates, *inter alia,* that the signal between a base station and a mobile station in each frequency band be multiplexed among physical channels, normally four, in a TDMA fashion. The basic unit is a time slot **12,** whose duration is that of 510 modulation bits and which normally constitutes one physical channel. A group of four consecutive time slots constitutes a frame **14** and a group of 18 consecutive frames constitutes a multi-frame 16. Each slot carries one or more logical channels. The signal transmitted during a time slot is called a burst. It consists of a sequence of 510 bits 10, which correspondingly modulate a sequence of 255 "symbols" - two consecutive bits to a symbol. A slot is also divided conceptually into two equal halves, 255 bits long, called sub-slots 13.

Logically there are in TETRA two main categories of channels - Traffic channels (TCH), to carry the subscribers' data, which may represent voice or other data to be communicated between them, and Control channels (CCH), containing internal data for controlling system operation. Control channels are classified into five categories, one of which, the Broadcast Control Channel (BCCH), is directed to all mobile stations - broadcasting to them general control information, which may, however, vary between particular cells. There are two types of BCCH: Broadcast Network Channel (BNCH), which carries system- and cell identification, some operational parameters and information about the neighbouring cells, and Broadcast Synchronisation Channel (BSCH), which carries initial synchronisation data and some other operational parameters.

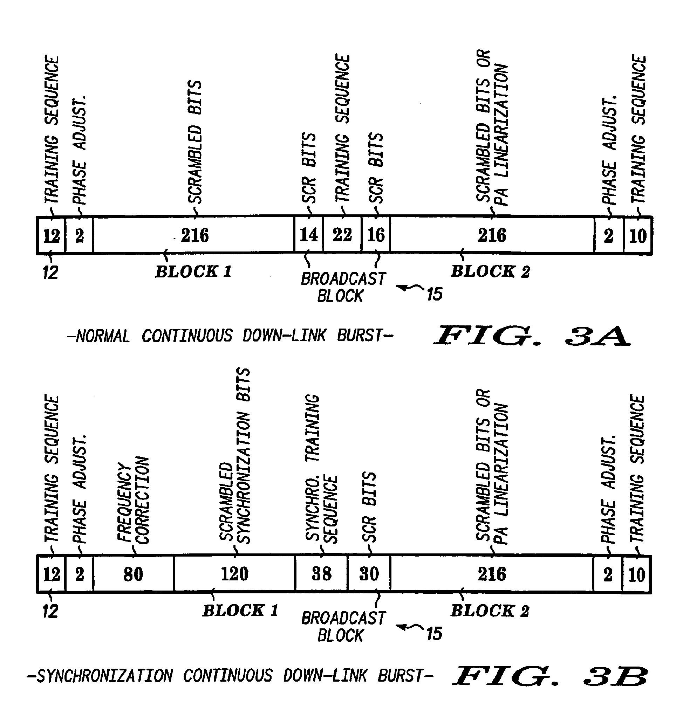

Broadcast Control channels are physically carried by downlink burst signals, which may be of two types - "Normal" and "Synchronisation". The structure of a normal burst signal, with relation to a time slot 12, is shown in Figure 3A. It is seen to consist primarily of two separate information carrying blocks, marked Block 1 and Block 2, each 216 bits long, which are associated with their respective sub-slots and are flanked by groups of bits for auxiliary utilities. The latter groups have fixed patterns, which, moreover, are common to all stations, and serve mainly to synchronise the reception and demodulation processes; in particular, training sequences serve for symbol synchronisation. The two blocks, which contain variable information, generally serve to carry the logical Traffic channels and certain Control channels. Unlike the auxiliary groups of bits, the bits in each information block are scrambled: that is they are multiplied (XOR'd) by a known sequence, unique to each base station. The scrambling helps to eliminate cross-talk between identical channels in cells that share the same frequencies (even though the cells are mutually remote).

The structure of a Synchronisation burst signal, shown in Figure 3B in relation to a time slot 12, is seen to be generally similar to that of a normal signal. However, there are differences in the first half, where Block 1 is considerably shorter. Here, again, the bits of each block are scrambled; the scrambling is, however, according to a common (default) pattern, and not unique to each station.

Each block of a normal burst may carry a separate channel or, as is the usual case for a Traffic Channel carrying voice transmission, for example, both blocks together carry one channel. A Broadcast Control channel (BCCH), however, is always carried by a single block. The allocation of particular occurrences of BCCH to each block in the various burst types, or even to various slots along a multi-frame, is specified by the TETRA standard. Of the two BCCH types, the Broadcast Synchronisation channel (BSCH) is always carried by the first half of a synchronisation burst. The Broadcast Network channel (BNCH), on the other hand, is always carried by the second half of either a synchronisation burst or a normal burst The latter can occur, for example, whenever there is free channel capacity (i.e. the particular time slot is not required for traffic service or control).

According to the TETRA standard, a particular carrier per site is denoted as the Main Carrier and time-slot 1 on the main carrier is exclusively dedicated to control channels.

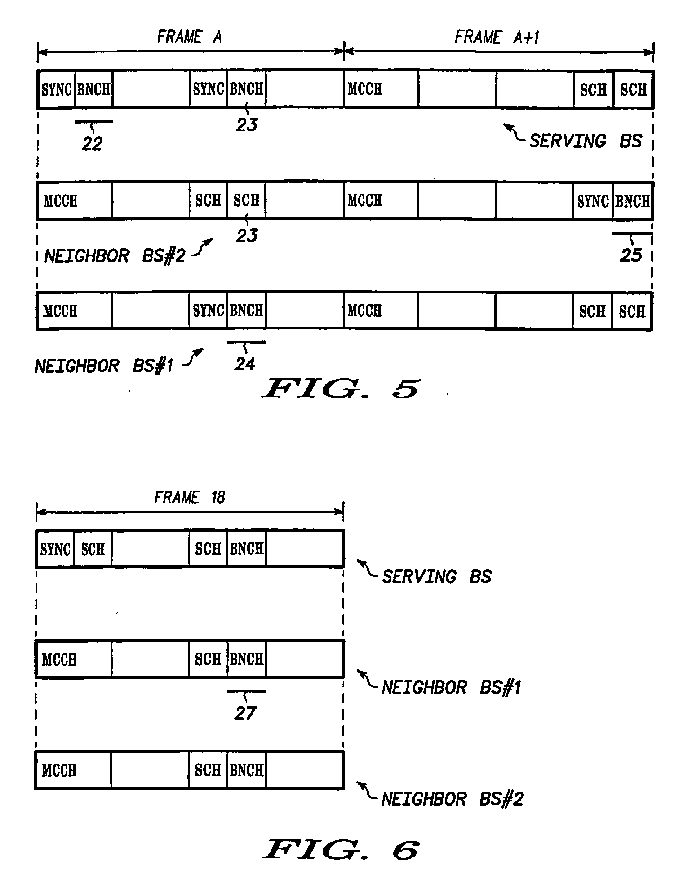

This is as denoted, for example, in Figure 5 for two consecutive frames (for three base stations) by the symbol MCCH **22**. All other physical channels are primarily allocated to the various traffic channels. When the number of active traffic channels equals the number of such physical channels, the system is considered to be "fully loaded" and no more traffic channels can be accepted. If, however, at any time the number of active traffic channels is smaller than the number of physical channels (a prevalent situation), there are some so-called unallocated physical channels. The latter are then made to carry some null signals, which are constant-value bits. In addition, frame number **18** (Fig. 2) of each multi-frame 16 on each carrier is entirely dedicated to control channels (CCHs). The allocation of particular types of CCH to each block of each slot of frame 18 is shown in the table of Figure 4 and is seen to vary over a cycle of four multi-frames, referred to as a super-frame. Only one type of CCH is of interest for localisation measurements according to the present invention, namely the Broadcast Network Channel (BNCH). This is because, on the one hand, it is fairly constant and therefore can be stored for subsequent detection and measurement. On the other hand, it is subject to the scrambling scheme specific to each base station and thus can be uniquely detected by a mobile station without interference from a similar signal from another base station.

According to the present invention, locating a mobile station is done by computation within the mobile station performed on signals received from at least three base stations, using Time-Difference Of Arrival (TDOA) techniques, as illustrated in Figure 1.

Simultaneous reception from multiple base stations is generally possible, owing to the fact that in a cellular network coverage areas of adjacent base stations overlap each other. The time difference is taken as the interval δ between the times of reception of similar signals from two base stations; δ = *t*₁ - *t*₂. When the mobile station 2 is observing a particular value δ between two base stations 4, its possible location is along a hyperbola 6 with foci at the locations of the two base stations. The difference between its focal distances is equal to cδ, where c is the speed of light. At least two such hyperbolas are needed, so that their intersection can be taken as the location estimate, as shown in Fig. 1. The estimation accuracy may be increased by measuring δ for additional pairs of base stations and averaging the locations obtained from the intersection of each pair of hyperbolas. TETRA utilises Mobile Assisted handoff, whereby neighbouring base stations are listed in some order of preference. Thus the sites to be used for location measurement, as outlined above, can be selected from the ordered list used for handoff.

As noted in the Summary above, measurement of time difference of arrival from two base stations generally requires presence of known data symbols in the signals of both base stations and involves correlating the signal received from each of the two base stations with a stored version thereof and measuring the relative time relationship between the two correlation maxima. The stored version of each signal is obtained from an initial sampling and is preferably realised as a corresponding digital time-domain matched filter. The process of correlation then consists of passing a received signal through the filter and detecting the relative timing of maximum output, as is well known in the art. Since each signal is thus correlated with an identical replica of itself, the process may be referred to as autocorrelation.

The required precision of time-difference measurement may be deduced from the required accuracy of the mobile station location by dividing the latter by the speed of light. Thus, for example, if the desired location accuracy is 100 meters, the precision of the time difference should be 100/c = ~0.33 microseconds. It is noted that this is about 100 times shorter than the nominal duration of one bit in the TETRA scheme. In order to achieve such precision, the signal to be correlated should be as long as possible and free of noise and disturbances. Training sequences, which in TETRA are present in each transmitted burst, are disqualified for this purpose, for two reasons:
(a) They are relatively short (typically 22 bits);
(b) They are identical in all channels, even those channels on co-channel frequencies, and, moreover, unscrambled. Therefore signals from remote base stations may add themselves on to the signal of interest, thus shifting their apparent average timing.

In contrast, the length of an information block in a normal sequence is 216 bits - which should be sufficient for the desired precision of measurement. Obviously, signals in these blocks serving the traffic channel are not suitable, since they generally vary with time and thus cannot be used for autocorrelation. On the other hand, signals carrying a control channel are more predictable, thus enabling autocorrelation. Of these, BSCH signals are, again, unsuitable, because they are not uniquely scrambled. Thus they may cause disturbances from co-frequency channels in remote base stations, similarly to those of training sequences discussed above.

Bursts carrying the BNCH channel, on the other hand, are very suitable for the purpose of TDOA measurement, because, as already mentioned above:
(a) for any base station they are fairly constant, i.e. repeated many times before system conditions change, and therefore suitable for autocorrelation; and
(b) these signals are subject to scrambling that is unique to each base-station and thus similar signals that may be received on a co-frequency from a remote base station will not be correlated and thus will not affect the accuracy of the measurement

It is noted that it is also possible to define a special logical channel for TDOA measurements, with some constant contents, which would be carried by suitable blocks of bursts. Such a new type of a channel is, however, not part of the standard, and would thus require changing of settings in all radios already deployed or being produced by a variety of manufacturers. Thus, according to the present invention, preferably only the signals carrying the BNCH channel are utilised for the purpose of location determination.

As explained above, a BNCH signal is carried by a single block of a burst (i.e. within one sub-slot). This may be the second block of a normal burst (Fig. 3A) or of a Synchronisation burst (Fig. 3B), in the latter case the first block carrying a BSCH (Sync) channel. When the system is not fully loaded, slots with both types of bursts may be free to carry extra instances of BNCH signal. When the system is fully loaded, only certain slots in frame 18 of each multi-frame cycle, with Normal bursts, may carry BNCH signals (in the second block), as shown in Fig. 4.

Utilisation of such signals for the purpose of TDOA measurements will now be described in greater detail, by way of examples and with the aid of Figures 4-6. This will be done for each of the two situations that may occur in the system, namely:
(a) the serving station is not fully loaded, that is - there are several slots unassigned; and
(b) the serving station is fully loaded, that is - all physical channels generally available for traffic (which include slots 2-4 on the main carrier and all slots on the other carriers) are assigned to traffic channels.

In general, the basic procedure is as follows:
**1)** A BNCH signal from the currently active base station is received, captured, digitised and stored as the weights of a digital matched filter.
**2)** A list of neighbouring base stations is obtained (preferably the handoff list from the serving base station) and two of them (or possibly more, if greater location accuracy is desired) are selected; for each of them the mobile station momentarily switches to the respective control channel frequency and step 1 is repeated, yielding corresponding matched filters.
**3)** Digitised signals subsequently received from the current serving base station are passed through the corresponding matched filter, to obtain a continuous correlation signal.
**4)** The correlation signal is time-gated during periods at which a repetition of the stored signal is expected, as well as amplitude-gated above some threshold, in order to detect the presence of a measurable signal.
**5)** The timing of the peak of the correlation signal, with respect to the (synchronous) frame structure, is noted.
**6)** The mobile station switches momentarily to the control carrier frequency of the first neighbouring base station and steps 3-5 are repeated.
**7)** Step 6 is repeated for the second neighbouring base station (and possibly for additional ones, if greater location accuracy is desired).
**8)** The noted times are compared, two at a time, and from the time-difference values obtained, the distances from the base stations are calculated as explained above.

Step 1 is preferably carried out immediately after establishing communication with the current serving base station (upon call initiation or handoff), since the BNCH signal is then received anyway, as part of the process. At this stage also the list of neighbouring stations, as needed for step 2, is automatically obtained. Step 2 is preferably performed at any opportune time prior to initiation of the location determination process (step 3 and onward).

In case (**a**) it is stipulated, according to a preferred embodiment of the invention, that the current BNCH channel may be carried in some or all of the unused slots. A typical situation is shown in Fig. 5 as an example. Figure 5 depicts the four time-slots of each of two typical consecutive frames, k and k+1, on the main (control) carrier of the serving base station and of two neighbouring base stations (marked #2 and #1, in that vertical order). In this particular example a BNCH signal appears in the second half of:
- slots 1 and 3 of frame k of the serving station,
- slot 3 of frame k of neighbouring station #1 and
- slot 4 of frame k+1 of neighbouring station #2.

If location measurement is required at the instant of the example of Fig. 5, then the mobile station, receiving signals from the Serving base station, proceeds with steps 3-5 above, gating in the BNCH data **22** in slot 1 of frame k. It then performs steps 6 and 7, receiving, in sequence, signals from, respectively, the first and second neighbouring base stations and gating in the BNCH data in, respectively, slot 3 of frame k **24** and slot 4 of frame k+1 25.

It is noted that for switching from the serving station to the first neighbouring station, more than a whole slot duration is available.

If, however, the BNCH signal of neighbouring station #1 had appeared in slot 2 (rather than 3, as shown), the required switching time would have been about the duration of half a slot (which is about 7 millisecond). Most radios are capable of switching at that rate; however, if a particular mobile station cannot switch fast enough, it has one of two alternatives for processing the signal from the second neighbouring station: (a) use only a portion of each BNCH signal block for the correlation; (b) wait for the next opportunity to receive the signal from that neighbouring station.

It is also noted that in the example of Fig. 5, if only the second BNCH signal from the serving station **23** (appearing in slot 3) were detected for correlation, the mobile station could not receive signal **24**, sent simultaneously by neighbouring #1, and would have to wait for another, later, appearance of such a signal.

After thus receiving and measuring all three relative times, step 8 is performed, to complete the location calculation.

The control (i.e. main) carrier is the preferred one for the above procedure because, according to preferred system procedures, this is the one whose available (three) time slots are usually the last ones allocated by the system to traffic channels and therefore are the most likely to be empty, and thus assignable to broadcast control channels, when the system is not fully loaded.

Timing and location measurement in case (b) is based on the particular feature in the TETRA standard that every eighteenth frame, on all carrier frequencies, is entirely dedicated to control signals. In fact, more specifically, it is based on the fact that a BNCH signal is carried by the second block of each slot of that frame once in a cycle of four multi-frames, i.e. once every 72 frames. This is as appears in the table of Figure 4 and explained above.

According to a preferred embodiment of the invention, measurable BNCH signals are detected and received for correlation from the serving station and the neighbouring stations during any frame 18 in the sequence in which they appear in the multi-frame cycle. For example, first the signal **26** in slot 4 (during the first multi-frame) is received from the serving station - to perform steps 3-5 of the procedure described above. Then signal **27** in slot 3 (during the second multi-frame) is received from neighbouring station #1 - to perform step 6. This particular situation is further illustrated in the frame 18 timing diagram of Figure 6, where measurable signal 27 is shown to appear simultaneously with similar signals from the other stations.

Subsequently step 7 is performed on measurable signal **28** in slot 2 (during the third multi-frame). Optionally, step 7 could then be repeated (for greater location accuracy) for an additional neighbouring station, using signal **29** in slot 1 (during the fourth multi-frame), and so on - using, again, signals **26, 27** etc. in subsequent multi-frame cycles for additional neighbouring stations or, alternatively, for repeating measurements on the first two neighbouring stations. Finally step 8 is performed, to complete the location process.

It is noted that, within the preferred embodiment, any other time slot (of frame 18 in the corresponding multi-frame cycle) could be chosen for the serving station, and other slots, in their sequence of appearance, chosen for the neighbouring stations. For example, slots 3, 2 and 1 (in that sequence), with respective signals **27, 28** and **29** could be used respectively. Preferably, the frame 18 first occurring within the four-multi-frame cycle after the request for locating has been obtained determines which time slot is chosen first. This choice occurs automatically if the correlator is set to simply detect the first occurrence of a measurable (i.e. BNCH) signal. It is further noted that the measurable signals from the various stations could also be received in any other sequence. However, the preferred sequence, explained above, assures that the complete data will be received and processed over the shortest time period possible. For the minimum of three stations for localisation, this period will, in the worst case, have the duration of three multi-frames, i.e. about three seconds. It is also noted that the carrier switching time required of the mobile station in this case is very long.

The worst case is that of a fully loaded system. This however occurs infrequently. Even in this worst case, a full location measurement, using three-stations TDMA, can be accomplished within, at most, three seconds. It is noted that for a fast moving station (e.g. in a vehicle) such a delay may degrade the accuracy of location calculation, but in such a case, a particular location is not definable anyway. Moreover, in case of an emergency, channels may be artificially vacated by the system, thus creating an opportunity for case 'a' operation, which, of course, is generally much faster.

An optional expedient for speeding up location measurements is to modify the protocol of the system so that BNCH signals are artificially inserted into unused slots - both in frames 1-17 of a multi-frame (to speed up case (**a**) measurements) and in frame **18** (in case of a fully loaded system). In the latter case, some, or all of the measurements on three stations could possibly be completed within a single frame.

## Claims

1. A method of operation in a cellular radio communication system operating according to a TDMA, time division multiple access, protocol to provide communication of traffic and control data, including the following steps:
a) identifying in a mobile station operating in the system at least one type of signal which can be measured that - is sent by a plurality of selected base transmitters including a serving base transmitter and at least two other neighbouring base transmitters,
b) obtaining and storing in the mobile station a sample of the identified signals from the selected base transmitters;
c) detecting by the mobile station an occurrence of the identified signal in a signal received from the serving base transmitter, then correlating the signal with the corresponding sample stored in step (b) and noting the relative time of peak correlation as a respective time of arrival;
d) detecting by the mobile station an occurrence of the identified signal in each of the signals received from said other selected neighbouring base transmitters, then correlating the signal in each case with the corresponding sample stored in step (b) and noting the relative time of peak correlation as a respective time of arrival; and
e) from the time of arrival values computing the location of the mobile station relative to the selected base transmitters;
**characterised in that** the identified signal received from each of the base transmitters and used in noting the time of arrival values is a BNCH , Broadcast Network Control Channel, burst carrying control data in a block of a given time slot of the TETRA TDMA protocol and that the computation of the location is carried out by the mobile station using the time of arrival values of the selected BNCH bursts.

2. A method according to claim 1 and wherein the mobile station computes for each pair of the identified signals from each of two or more selected pairs of the base transmitters a TDOA, time difference of arrival, value which is the difference between the two respective times of arrival for the identified signal from each of the transmitters of the pair and the mobile station computes the location from the TDOA values.

3. A method according to claim 1 or claim 2 wherein the mobile station correlates a measured version of the identified signal with a stored sample thereof by passing said signal through a digital time-matched filter.

4. A method according to any one of claims 1 to 3 and wherein the mobile station sends a signal to any of the selected neighbouring base transmitters to request the transmitter to send a measurable signal for use as the selected identified signal over any time slot of the TDMA protocol that has not been allocated to carry traffic.

5. A method according to any one of the preceding claims 1 to 4 wherein the mobile station receives the identified signals from any of the base transmitters over any of a plurality of carrier frequencies, one of which is a main carrier frequency, and in steps (c) and (d) said identified signal is received over said main carrier frequency.

6. A method according to any one of the claims 1 to 5 and wherein the mobile station employs a handoff control function using signals from neighbouring base transmitters and wherein the mobile station selects neighbouring base transmitters for use in location measurements using the handoff control function.

7. A method according to claim 5 or claim 6 and wherein the mobile station has its receiver switched to receive different carrier frequencies sent by the selected base stations.

8. A method according to any one of claims 5 to 7, and wherein the mobile station operates so that said detecting is limited to take place during the latest available frame of any multi-frame cycle of the TDMA protocol, if all time slots of earlier frames fully serve to carry traffic.

9. A method according to any one of the preceding claims and which is operable so that selected identified signals received from the serving base transmitter and from each of the other selected neighbouring base transmitters are detected, respectively, by the mobile station during consecutive multi-frames of the TDMA protocol.

10. A method according to any one of the preceding claims and wherein the mobile station receives the identified signals for the location measurements during periods of normal transmission of traffic.

11. A mobile station which is operable to determine its own location by the method claimed in any one of the preceding claims and which comprises:
a detector for detecting the reception of a signal sent by each of at least three base transmitters including a serving base transmitter and at least two other base transmitters ;
a memory for storing a sample of a signal sent by each of said at least three neighbouring base transmitters;
a correlator coupled to the memory and to the detector for correlating each detected signal detected by the detector with a respective one of corresponding stored samples stored by the memory and for noting a relative time of peak correlation for each signal as a respective time of arrival; and
a processor coupled to the correlator for calculating timing and/or TDOA values from pairs of results of said time correlation and for calculating the location of the mobile station from at least two pairs of said TDOA values,
**characterised in that** the the signal received in operation from each of the base transmitters and used in noting the time of arrival values is a BNCH burst carrying control data in a block of a given time slot of the TETRA TDMA protocol and that the computation of the location is carried out by the mobile station using the time of arrival values of the selected BNCH bursts.

12. A mobile station according to claim 11, wherein the correlator includes a digital time-matched filter, having multipliers whose values are settable from any of said stored samples.

13. A mobile station according to claim 11 or claim 12, and also including a switch for switching the frequency to which the receiver of the mobile station is tuned from a carrier of one of said neighbouring transmitters to a carrier of another one of said neighbouring transmitters.

14. A mobile station according to claim 11, wherein said detector is adapted to confine detection of said signal carrying BNCH burst carrying control data to the eighteenth frame of any TDMA multi-frame.

15. A mobile station according to any one of the preceding claims 11 to 14 and which is operable to store results of the location measurements and computations in a memory.

16. A mobile station according to any one of the preceding claims 11 to 15 and which is operable to transmit the location results by radio communication to an associated system unit or by a radio or other communication link to a destination unit outside the cellular communication system.

17. A mobile station according to any one of the preceding claims 11 to 16 and which is operable to produce signals allowing the location results to be displayed on a display device associated with the mobile station.

18. A mobile station according to claim 17 and which includes the associated display device and in operation the location results are displayed thereon as numbers which represent location co-ordinates and/or as a graphical map image wherein the detected location is shown on the map.

## Patentansprüche

1. Betriebsverfahren in einem zellularen Funkkommunikationssystem, welches gemäß einem TDMA-Protokoll (TDMA = "time division multiple access" / Zeitmultiplexzugriff) arbeitet, zum Bereitstellen einer Kommunikation von Verkehrs- und Steuerdaten, einschließlich der folgenden Schritte:
a) Identifizieren, in einer Mobilstation, die in dem System arbeitet, zumindest eines Signaltyps, welcher gemessen werden kann und durch eine Vielzahl von ausgewählten Basissendern, einschließlich eines versorgenden Basissenders und zumindest zwei anderen benachbarten Basissendern, gesendet wird;
b) Erlangen und Speichern, in der Mobilstation, eines Samples der identifizierten Signale von den ausgewählten Basissendern;
c) Erfassen, durch die Mobilstation, eines Auftretens des identifizierten Signals in einem Signal, welches von dem versorgenden Basissender empfangen wird, dann Korrelieren des Signals mit dem entsprechenden Sample, welches in Schritt (b) gespeichert wurde, und Merken der Relativzeit der Peak-Korrelation als eine entsprechende Ankunftszeit;
d) Erfassen, durch die Mobilstation, eines Auftretens des identifizierten Signals in jedem der Signale, die von den anderen ausgewählten benachbarten Basissendern empfangen werden, dann Korrelieren des Signals in jedem Fall mit dem entsprechenden Sample, welches in Schritt (b) gespeichert wurde, und Merken der Relativzeit der Peak-Korrelation als eine entsprechende Ankunftszeit; und
e) Errechnen des Standortes der Mobilstation bezüglich der ausgewählten Basissender aus den Ankunftszeitwerten;
**dadurch gekennzeichnet, dass** das identifizierte Signal, welches von jedem der Basissender empfangen wurde und beim Merken der Ankunftszeitwerte verwendet wurde, ein BNCH-Burst (BNCH = Broadcast Network Control Channel" / Rundsendenetzwerksteuerkanal) ist, der Steuerdaten in einem Block eines vorgegebenen Zeitslots des TETRA-TDMA-protokolls trägt, und dass die Berechnung des Standortes von einer Mobilstation ausgeführt wird, welche die Ankunftszeitwerte der ausgewählten BNCH-Bursts verwendet.

2. Verfahren gemäß Anspruch 1, wobei die Mobilstation für jedes Paar identifizierter Signale aus jedem von zwei oder mehr ausgewählten Paaren von Basissendern einen TDOA-Wert (TDOA = "time difference of arrival" / Ankunftszeitunterschied) berechnet, was der Unterschied zwischen den zwei entsprechenden Ankunftszeiten für das identifizierte Signal von jedem der Sender des Paares ist, und die Mobilstation den Standort aus den TDOA-Werten berechnet.

3. Verfahren gemäß Anspruch 1 oder 2, wobei die Mobilstation eine gemessene Version des identifizierten Signals mit dessen gespeichertem Sample korreliert, indem sie das Signal durch einen digitalen zeitabgestimmten Filter führt.

4. Verfahren gemäß einem der Ansprüche 1 bis 3, wobei die Mobilstation ein Signal zu irgendeinem der ausgewählten benachbarten Basissender sendet, um den Sender aufzufordern, ein messbares Signal für die Verwendung als das ausgewählte identifizierte Signal über irgendeinen Zeitslot des TDMA-Protokolls zu senden, der nicht zum Tragen von Verkehr zugeordnet wurde.

5. Verfahren gemäß einem der vorhergehenden Ansprüche 1 bis 4, wobei die Mobilstation die identifizierten Signale von irgendeinem der Basissender über irgendeine einer Vielzahl von Trägerfrequenzen empfängt, von denen eine eine Hauptträgerfrequenz ist, und in den Schritten (c) und (d) das identifizierte Signal über die Hauptträgerfrequenz empfangen wird.

6. Verfahren gemäß einem der Ansprüche 1 bis 5, wobei die Mobilstation eine Übergabe-Steuerfunktion ("handoff control function") verwendet, welche Signale von benachbarten Basissendern verwendet, und wobei die Mobilstation benachbarte Basissender für die Verwendung in Standortmessungen unter Verwendung der Übergabe-Steuerfunktion auswählt.

7. Verfahren gemäß Anspruch 5 oder 6, wobei die Mobilstation ihren Empfänger so geschaltet hat, dass er verschiedene Trägerfrequenzen empfängt, die von den ausgewählten Basisstationen gesendet werden.

8. Verfahren gemäß einem der Ansprüche 5 bis 7, wobei die Mobilstation so arbeitet, dass die Erfassung darauf begrenzt ist, dass sie während dem zuletzt verfügbaren Rahmen irgendeines Multirahmenzyklusses des TDMA-Protokolls stattfindet, wenn alle Zeitslots von früheren Rahmen vollständig zum Tragen von Verkehr dienen.

9. Verfahren gemäß einem der vorhergehenden Ansprüche, welches so betreibbar ist, dass die ausgewählten identifizierten Signale, die von dem versorgenden Basissender und von jedem der anderen ausgewählten benachbarten Basissender empfangen werden, jeweils durch die Mobilstation während der aufeinanderfolgenden Multi-Rahmen des TDMA-Protokolls erfasst werden.

10. Verfahren gemäß einem der vorhergehenden Ansprüche, wobei die Mobilstation die identifizierten Signale für die Standortmessungen während Zeitspannen der normalen Verkehrsübertagung empfängt.

11. Mobilstation, welche dazu betreibbar ist, ihren eigenen Standort durch das Verfahren zu bestimmen, welches in einem der vorhergehenden Ansprüche beansprucht wurde, und welche folgendes umfasst:
einen Detektor zum Detektieren des Empfangs eines Signals, welches von jedem der zumindest drei Basissender gesendet wird, welche einen versorgenden Basissender und zumindest zwei andere Basissender einschließen;
einen Speicher zum Speichern eines Samples eines Signals, welches von jedem der zumindest drei benachbarten Basissender gesendet wurde;
einen Korrelierer, welcher an den Speicher und den Detektor gekoppelt ist, um jedes detektierte Signal, welches durch den Detektor detektiert wurde, mit einem entsprechenden der entsprechenden gespeicherten Samples zu korrelieren, die von dem Speicher gespeichert werden, und um sich eine Relativzeit der Peak-Korrelation für jedes Signal als eine entsprechende Ankunftszeit zu merken; und
einen Prozessor, der an dem Korrelierer gekoppelt ist, um die Zeitsteuerung und/oder TDOA-Werte von Ergebnispaaren der Zeitkorrelierung zu berechnen und um den Standort der Mobilstation aus zumindest zwei Paaren von TDOA-Werten zu berechnen;
**dadurch gekennzeichnet, dass** das Signal, welches beim Betrieb von jedem der Basissender empfangen wird und bei dem Merken der Ankunftszeitwerte verwendet wird, ein BNCH-Burst ist, der Steuerdaten in einem Block eines vorgegebenen Zeitsplots des TETRA-TDMA-Protokolls trägt, und dass die Berechnung des Standorts von der Mobilstation unter Verwendung der Ankunftszeitwerte des ausgewählten BNCH-Bursts ausgeführt wird.

12. Mobilstation gemäß Anspruch 11, wobei der Korrelierer einen digitalen zeitangepassten Filter aufweist, der Multiplizierer hat, dessen Werte aus irgendeinem der gespeicherten Samples einstellbar sind.

13. Mobilstation gemäß Anspruch 11 oder 12, des Weiteren mit einer Schalteinrichtung zum Umschalten der Frequenz, auf welche der Empfänger der Mobilstation eingestellt ist, von einem Träger von einem der benachbarten Sender zu einen Träger eines anderen der benachbarten Sender.

14. Mobilstation gemäß Anspruch 11, wobei der Detektor dazu angepasst ist, die Erfassung des Signals, welches den BNCH-Burst trägt, welcher Steuerdaten trägt, auf den achtzehnten Rahmen irgendeines TDMA-Multirahmens zu begrenzen.

15. Mobilstation gemäß einem der vorhergehenden Ansprüche 11 bis 14, die dazu betreibbar ist, Ergebnisse der Standortmessungen und Berechnungen in einem Speicher zu speichern.

16. Mobilstation gemäß einem der vorhergehenden Ansprüche 11 bis 15, die dazu betreibbar ist, Standortergebnisse durch Funkkommunikation an eine zugehörige Systemeinheit oder durch Funk oder eine andere Kommunikationsverbindung an eine Bestimmungseinheit außerhalb des zellularen Kommunikationssystems zu übertragen.

17. Mobilstation gemäß einem der vorhergehenden Ansprüche 11 bis 16, das dazu betreibbar ist, Signale zu erzeugen, welche erlauben, dass die Standortergebnisse auf einer Anzeigevorrichtung angezeigt werden, die zur Mobilstation zugehörig ist.

18. Mobilstation gemäß Anspruch 17, welche die zugehörige Anzeigevorrichtung enthält und die Standortergebnisse im Betrieb als Zahlen, welche die Standortkoordinaten repräsentieren, und/oder als ein graphisches Kartenbild darauf angezeigt werden, wobei der erfasste Standort auf der Karte angezeigt wird.

## Revendications

1. Procédé d'exploitation d'un système de radiocommunication cellulaire fonctionnant selon un protocole d'accès multiple à répartition dans le temps, TDMA, pour permettre une communication de données de trafic et de commande, comprenant les étapes :
a) d'identification, dans une station mobile fonctionnant dans le système, d'au moins un type de signal pouvant être mesuré, qui est envoyé par une pluralité d'émetteurs de base sélectionnés, comprenant un émetteur de base de desserte et au moins deux autres émetteurs de base voisins ;
b) d'obtention et stockage, dans la station mobile, d'un échantillon des signaux identifiés provenant des émetteurs de base sélectionnés ;
c) de détection, par la station mobile, d'une occurrence du signal identifié dans un signal reçu en provenance de l'émetteur de base de desserte, puis corrélation du signal avec l'échantillon correspondant stocké à l'étape b), et enregistrement de l'instant relatif de la corrélation maximale en tant qu'instant de réception respectif ;
d) de détection, par la station mobile, d'une occurrence du signal identifié dans chacun des signaux reçus en provenance desdits autres émetteurs de base voisins sélectionnés, puis corrélation du signal, dans chaque cas, avec l'échantillon correspondant stocké à l'étape b), et enregistrement de l'instant relatif de la corrélation maximale en tant qu'instant de réception respectif ; et
e) de calcul, à partir des valeurs des instants de réception, de la localisation de la station mobile par rapport aux émetteurs de base sélectionnés ;
**caractérisé en ce que** le signal identifié reçu en provenance de chacun des émetteurs de base et utilisé pour enregistrer les valeurs des instants de réception est une salve de Canal de Commande de Réseau de Diffusion, BNCH, transportant des données de commande dans un bloc d'une tranche de temps donnée du protocole TETRA TDMA, et **en ce que** le calcul de la localisation est effectué par la station mobile au moyen des valeurs des instants de réception des salves BNCH sélectionnées.

2. Procédé selon la revendication 1, et dans lequel la station mobile calcule, pour chaque paire de signaux identifiés provenant de chacune de deux paires sélectionnées, ou plus, des émetteurs de base, une valeur de différence d'instants de réception, TDOA, qui est la différence entre les deux instants de réception respectifs pour les signaux identifiés provenant de chacun des émetteurs de la paire, et la station mobile calcule la localisation à partir des valeurs TDOA.

3. Procédé selon la revendication 1 ou la revendication 2, dans lequel la station mobile corrèle une version mesurée du signal identifié à un échantillon stocké de celui-ci, en faisant passer ledit signal à travers un filtre numérique adapté dans le domaine temporel.

4. Procédé selon l'une quelconque des revendications 1 à 3, et dans lequel la station mobile envoie un signal à l'un quelconque des émetteurs de base voisins sélectionnés pour demander à l'émetteur d'envoyer un signal mesurable qu'elle utilisera en tant que signal identifié sélectionné, sur toute tranche de temps du protocole TDMA qui n'a pas été allouée au transport de trafic.

5. Procédé selon l'une quelconque des revendications 1 à 4, dans lequel la station mobile reçoit les signaux identifiés en provenance de l'un quelconque des émetteurs de base, sur l'une quelconque d'une pluralité de fréquences porteuses, dont l'une est une fréquence porteuse principale, et, aux étapes (c) et (d), ledit signal est reçu sur ladite fréquence porteuse principale.

6. Procédé selon l'une quelconque des revendications 1 à 5, et dans lequel la station mobile utilise une fonction de commande de transfert faisant usage de signaux provenant d'émetteurs de base voisins, et dans lequel la station mobile sélectionne des émetteurs de base voisins qu'elle utilise pour effectuer des mesures de localisation au moyen de la fonction de commande de transfert.

7. Procédé selon la revendication 5 ou la revendication 6, et dans lequel le récepteur de la station mobile est commuté de manière à recevoir les différentes fréquences porteuses envoyées par les stations de base sélectionnées.

8. Procédé selon l'une quelconque des revendications 5 à 7, et dans lequel la station mobile agit de telle sorte que ladite détection soit limitée à une exécution pendant la dernière trame disponible de tout cycle de plusieurs trames du protocole TDMA, si toutes les tranches de temps des trames précédentes servent totalement à transporter du trafic.

9. Procédé selon l'une quelconque des revendications précédentes, et qui peut être mis en oeuvre de telle sorte que des signaux identifiés sélectionnés, reçus en provenance de l'émetteur de base de desserte et de chacun des autres émetteurs de base voisins sélectionnés, soient respectivement détectés par la station mobile pendant des groupes de trames consécutifs du protocole TDMA.

10. Procédé selon l'une quelconque des revendications précédentes, et dans lequel la station mobile reçoit les signaux identifiés pour les mesures de localisation pendant des périodes de transmission normale du trafic.

11. Station mobile qui est capable de déterminer sa propre localisation au moyen du procédé selon l'une quelconque des revendications précédentes, et qui comprend :
un détecteur pour détecter la réception d'un signal envoyé par chacun d'au moins trois émetteurs de base, comprenant un émetteur de base de desserte et au moins deux autres émetteurs de base ;
une mémoire pour stocker un échantillon d'un signal envoyé par chacun desdits au moins trois émetteurs de base voisins ;
un corrélateur couplé à la mémoire et au détecteur pour corréler chaque signal détecté par le détecteur à l'un respectif des échantillons stockés correspondants, stockés dans la mémoire, et pour enregistrer un instant relatif de corrélation maximale pour chaque signal en tant qu'instant de réception respectif ; et
un processeur couplé au corrélateur pour calculer des valeurs de synchronisation et/ou de TDOA à partir de paires de résultats de ladite corrélation temporelle et pour calculer la localisation de la station mobile à partir d'au moins deux paires desdites valeurs TDOA,
**caractérisé en ce que** le signal reçu, pendant le fonctionnement, en provenance de chacun des émetteurs de base, et utilisé pour l'enregistrement des valeurs des instants de réception, est une salve BNCH transportant des données de commande dans un bloc d'une tranche de temps données du protocole TETRA TDMA, et **en ce que** le calcul de la localisation est effectué par la station mobile au moyen des valeurs des instants de réception des salves BNCH sélectionnées.

12. Station mobile selon la revendication 11, dans laquelle le corrélateur contient un filtre numérique adapté dans le domaine temporelle, ayant des multiplieurs dont les valeurs peuvent être définies à partir de l'un quelconque desdits échantillons stockés.

13. Station mobile selon la revendication 11 ou la revendication 12, et contenant également un commutateur pour commuter la fréquence à laquelle le récepteur de la station mobile est accordé, depuis une porteuse de l'un desdits émetteurs voisins vers une porteuse d'un autre desdits émetteurs voisins.

14. Station mobile selon la revendication 11, dans laquelle ledit détecteur est conçu pour confiner la détection dudit signal transportant une salve BNCH transportant des données de commande à la dix-huitième trame de tout groupe de trames TDMA.

15. Station mobile selon l'une quelconque des revendications 11 à 14, et qui est capable de stocker les résultats des mesures et des calculs de localisation dans une mémoire.

16. Station mobile selon l'une quelconque des revendications 11 à 15, et qui est capable de transmettre les résultats de la localisation par radiocommunication à une unité du système associé, ou par une liaison de radiocommunication ou d'un autre type à une unité de destination externe au système de communication cellulaire.

17. Station mobile selon l'une quelconque des revendications 11 à 16, et qui est capable de produire des signaux permettant l'affichage des résultats de la localisation sur un écran associé à la station mobile.

18. Station mobile selon la revendication 17, et qui comprend l'écran associé sur lequel les résultats de la localisation sont affichés, pendant le fonctionnement, sous la forme de nombres qui représentent les coordonnées de la localisation et/ou sous la forme d'une image cartographique sur laquelle est représentée la localisation détectée.
